# EUROPÄISCHE PATENTSCHRIFT

(11) **EP 3 152 103 B1**
(45) Veröffentlichungstag und Bekanntmachung des Hinweises auf die Patenterteilung: **08.01.2020**
(21) Anmeldenummer: 15728406.8
(22) Anmeldetag: 26.05.2015
(51) Int. Cl.: B62K 19/16, B62M 6/55, B29C 65/16, B29C 65/48, B29C 65/78, B29K 77/00, B29K 105/12

(54) **VERFAHREN ZUR HERSTELLUNG VON PEDELEC-RAHMEN AUS KUNSTSTOFF UND ENTSPRECHEND HERGESTELLTER PEDELEC RAHMEN**
METHOD FOR MANUFACTURING PLASTIC PEDELEC FRAMES, AND ACCORDINGLY MANUFACTURED PEDELEC FRAME
PROCÉDÉ DE PRODUCTION DE CADRES DE VÉLO ÉLECTRIQUE EN MATIÈRE PLASTIQUE ET CADRE DE VÉLO ÉLECTRIQUE AINSI PRODUIT

(30) Priorität: 04.06.2014 DE 102014107852
(43) Veröffentlichungstag der Anmeldung: 12.04.2017
(73) Patentinhaber: REHAU AG + Co, 95111 Rehau (DE)
(72) Erfinder: OELSCHLEGEL, Alexander, 95176 Konradsreuth (DE); SONNTAG, Martin, 95028 Hof (DE); RINESCH, Daniel, 95030 Hof (DE)
(86) Internationale Anmeldenummer: PCT/EP2015/001075
(87) Internationale Veröffentlichungsnummer: WO 2015/185193

(56) Entgegenhaltungen:
- WO-A1-2011/033505
- WO-A1-2013/029788
- CA-A1- 2 181 153

## Beschreibung

Die vorliegende Erfindung betrifft ein Verfahren für die Herstellung eines Pedelec-Rahmens, bei dem zwei Kunststoff-Halbschalen zusammengefügt und vorzugsweise stoffschlüssig miteinander verbunden werden. Pedelecs unterscheiden sich von einem normalen Fahrrad durch einen zusätzlichen Elektromotor, ein Batterieelement zum Motorantrieb sowie in der Regel einer Steuerelektronik für den Motor. In der Praxis werden Pedelec-Rahmen häufig aus Aluminium gefertigt.

Bei Pedelecs besteht im Vergleich zu normalen Fahrrädern die Besonderheit, dass sie zusätzlich mit einem Elektro-Motor und wenigstens einem Batterieelement ausgestattet werden müssen. Der Elektro-Motor kann zur Unterstützung des Pedalantriebs durch den Fahrer zugeschaltet werden. Des Weiteren enthalten Pedelecs oftmals eine Steuerelektronik, die die aufgewandte Kraft oder die Geschwindigkeit misst und bei Erreichen bestimmter Werte den Motor betätigt bzw. abschaltet. Die zusätzlichen Elemente eines Pedelecs haben zur Folge, dass die Rahmenrohre mit einem vergleichsweise großen Durchmesser gefertigt werden müssen, um die Versorgungselemente darin unterzubringen. Teilweise werden diese auch außen an dem Rahmen befestigt, was jedoch ästhetisch nicht sehr ansprechend ist.

Außerdem sind Pedelec-Rahmen aufgrund der zusätzlichen Elemente wesentlich schwerer als normale Fahrrad-Rahmen. Es gibt Ansätze, Pedelec-Rahmen aus zwei Halbschalen herzustellen, in denen die Versorgungselemente verstaut werden. Dies wird unter anderem in den Dokumenten DE 10 2011 053 100 A1 und DE20 2013 002 987 U1 offenbart. Aus der letztgenannten Schrift ist ein Pedelec-Rahmen bekannt, der aus zwei Halbschalen gefertigt wird. Bei den üblicherweise verwendeten Kunststoffen mangelt es jedoch in vielen Fällen an der nötigen Belastbarkeit des Materials, die gerade bei einem Pedelec aufgrund des zusätzlichen Gewichts der Antriebselemente notwendig ist. Das Dokument WO 2011/033505 A1 offenbart ein Verfahren zur Herstellung eines Pedelec-Rahmens aus Kunststoff, wobei dieser durch stoffschlüssiges Zusammenfügen zweier entsprechender Kunststoff-Halbschalen hergestellt wird, wobei der Pedelec-Rahmen Aufnahmen für einen Lenker, für ein Tretlager und für einen Fahrersattel aufweist, und wobei die beiden Kunststoff-Halbschalen mittels eines Spritzgussverfahrens aus einem thermoplastischen Kunststoff hergestellt werden, der ein Polyamid enthält.

Der Erfindung liegt die Aufgabe zugrunde, ein Verfahren zur Herstellung eines Pedelec-Rahmens aus Kunststoff bereit zu stellen, das eine hohe Belastbarkeit des Pedelec-Rahmens gewährleistet und sich gut automatisieren lässt.

Die Aufgabe wird erfindungsgemäß gelöst durch ein Verfahren zur Herstellung eines Pedelec-Rahmens aus Kunststoff gemäß Anspruch 1.

Die Halbschalen sind dabei vorzugsweise im Wesentlichen spiegelbildlich zueinander geformt. Durch ihr Zusammenfügen entsteht zwischen den Halbschalen ein innerer Hohlraum, der zur Aufnahme mindestens einer Pedelec-Komponente dienen kann. Die vom Hohlraum aufgenommene Pedelec-Komponente kann z.B. ein Energiespeicher, vorzugsweise eine Batterie und/oder ein Elektromotor des Pedelecs sein. Zweckmäßigerweise wird durch das Zusammenfügen der Kunststoff-Halbschalen für den Energiespeicher und/oder den Elektromotor und/oder das Tretlager im inneren Hohlraum jeweils eine definierte Positionierung geschaffen. Neben den Aufnahmen für Lenker, Tretlager und ggf. Fahrersattel kann der Pedelec-Rahmen einen in die Halbschalen integrierten Hinterbau für die Lagerung des Hinterrads aufweisen. Alternativ hierzu ist es aber auch möglich, dass zur Lagerung des Hinterrads an dem Pedelec-Rahmen ein separater Hinterbau befestigt ist. Dieser Hinterbau kann mit einer Federung versehen sein. Die Innenseiten der Halbschalen enthalten zweckmäßigerweise Positionierungselemente für den Energiespeicher, vorzugsweise eine Batterie, sowie für einen Elektromotor. Diese Positionierungselemente sind zweckmäßigerweise einstückig an eine der beiden oder auch einstückig an beide Halbschalen angeformt. In den Aufnahmen des Pedelec-Rahmens können entsprechende Aufnahmehülsen für den Lenker, das Tretlager oder den Fahrersattel vorgesehen sein, um jeweils eine nahtfreie, stabile Aufnahmevorrichtung zu schaffen.

Das erfindungsgemäße Verfahren hat den Vorteil, dass es aufgrund der Verwendung eines teilaromatischen Polyamids die Herstellung von leichten und qualitativ hochwertigen Pedelec-Rahmen ermöglicht, die eine besonders hohe Steifigkeit besitzen und darüber hinaus eine hohe Stabilität bei Temperaturbelastung aufweisen. Das erfindungsgemäß verwendete Material besitzt eine gute Schweißfähigkeit, so dass ggf. auf bekannte Klebeverfahren verzichtet werden kann und somit ein zeitaufwändiges Aushärten des Klebstoffes entfällt.

Selbstverständlich liegt es aber auch im Rahmen der Erfindung, die Kunststoff-Halbschalen mittels eines Klebstoffes zusammen zu fügen. Das erfindungsgemäße Verfahren ermöglicht es, einen kompletten Pedelec-Rahmen aus einem Kunststoff herzustellen und so auf schwere Bauteile aus Metall zu verzichten.

Ein weiterer Vorteil des verwendeten Materials ist aufgrund dessen ausgeprägter Fließfähigkeit die Möglichkeit, vorzugsweise an der Innenseite der jeweiligen Halbschale, Verrippungen und/oder Verbindungs- und/oder Funktionselemente an die Halbschalen während des Spritzgießvorganges anzuspritzen. Diese können als Aufnahmen weiterer Pedelec-Komponenten wie Gabel, Tretlager, Sattel oder Lenker dienen.

Die zwei Halbschalen werden erfindungsgemäß aus einem faserverstärkten thermoplastischen Kunststoff hergestellt, welcher ein teilaromatisches Polyamid enthält. Teilaromatische Polyamide weisen im Vergleich zu konventionellen Polyamiden verbesserte thermische Eigenschaften und eine sehr gute Maßhaltigkeit auf. Das erfindungsgemäße teilaromatische Polyamid wird zweckmäßigerweise ausgewählt aus einem solchen, das aliphatische Dicarbonyl-Wiederholeinheiten und aromatische Diamino-Wiederholeinheiten enthält, oder aus einem solchen, das aromatische Dicarbonyl-Wiederholeinheiten und aliphatische Diamino-Wiederholeinheiten enthält, oder aus einer Mischung der vorgenannten Substanzen. Vorzugsweise enthält das teilaromatische Polyamid meta-Xylylendiamin-Wiederholeinheiten und 1,6-Hexandionyl-Wiederholeinheiten. Die Kombination dieser Komponenten eignet sich insbesondere wegen der damit erzielbaren hohen Steifigkeit, der geringen Wasseraufnahme sowie der hohen Beständigkeit gegen Feuchtigkeit und Wärme.

Um die Materialeigenschaften weiter zu optimieren, wird erfindungsgemäß dem faserverstärkten thermoplastischen Kunststoff neben dem teilaromatischen Polyamid auch ein aliphatisches Polyamid zugemischt. Dies hat auch eine Kostenersparnis zur Folge. Bevorzugt beträgt der Gewichtsanteil des teilaromatischen Polyamids bezogen auf die gesamte Kunststoffmasse ohne Faserverstärkung mindestens 50 %, vorzugsweise mindestens 70 %.

Der Gewichtsanteil der Faserverstärkung im Kunststoff liegt bei 15 - 70%, vorzugsweise bei 40 - 60%. Überraschenderweise ist auch dieser hochgefüllte und daher hochbelastbare Kunststoff z.B. sehr gut zum Laserschweißen geeignet. Mit einem Gewichtsanteil der Fasern unter 15% besäße das teilaromatische Polyamid eine zu geringe Festigkeit. Bei einem Gewichtsanteil über 70% besäße das Material eine geminderte Formbarkeit. Außerdem ist ein Polyamid mit einem solchen Faservolumen zu starr und spröde für die Verwendung in einem Pedelec-Rahmen.

Für die Faserverstärkung eignen sich Carbon-, Aramid- oder Glasfasern. Vorzugsweise werden lediglich Glasfasern verwendet. Diese sind im Vergleich zu Carbon- oder Aramidfasern wesentlich kostengünstiger und besitzen trotzdem eine gute Armierung bei gleichzeitig sehr hoher thermischer und chemischer Stabilität.

Es eignen sich insbesondere Kurzfasern mit einer durchschnittlichen Länge von weniger als 15 mm, vorzugsweise als 10 mm, z.B. weniger als 5 mm. Noch kürzere durchschnittliche Faserlängen von weniger als 3 mm, z.B. weniger als 2 mm oder weniger als 1 mm sind ebenfalls geeignet. Kurzfasern können in der Kunststoff-Matrix fein verteilt im Spritzgussverfahren problemlos verarbeitet werden können. Das Spritzgießen ermöglicht eine extrem hohe Formvielfalt und eignet sich insbesondere auch dazu, die oben beschriebenen Positionierungselemente zur Positionierung von Elektromotor und Energiespeicher über eine entsprechende Formgestaltung der Spritzgusswerkzeuge auf einfachste Weise an die Halbschale/n anzuformen. Kurze Fasern sind zudem wesentlich kostengünstiger als Langfasern.

Zweckmäßigerweise ist die Geometrie der Halbschalen an ihren Fügerändern derart beschaffen, dass der Fügerand der einen Halbschale eine Nut und der Fügerand der anderen Halbschale eine in die Nut eingreifende Feder aufweist. Nut und Feder sind vorzugsweise so dimensioniert, dass beim Zusammenfügen der Halbschalen eine Klemmverbindung entsteht. Dazu weist entweder die Feder ein leichtes Übermaß oder die Nut ein leichtes Untermaß auf. Dadurch werden die zwei Halbschalen vor dem Schweißvorgang zunächst gegeneinander vorfixiert. Dies ermöglicht eine Kontrolle des korrekten Zusammenfügens der Halbschalen vor dem z.B. irreversiblen stoffschlüssigen Fügevorgang (Kleben, Schweißen etc.) Im Bedarfsfall kann die Nut-Feder-Verbindung noch einmal vor der Herstellung des stoffschlüssigen Verbundes gelöst werden. Insbesondere ist es auf diese Weise möglich, die korrekte Positionierung von Elektromotor und Energiespeicher in dem von den beiden Halbschalen gebildeten Hohlraum zu kontrollieren, bevor z.B. der Schweißvorgang durchgeführt wird oder der Klebstoff aushärtet.

Anschließend werden die zusammengefügten Halbschalen vorzugsweise stoffschlüssig miteinander verbunden. Dazu werden sie z.B. randseitig, vorzugsweise umlaufend, mittels Laserstrahlung zum Pedelec-Rahmen verschweißt. Zur Erzeugung der Laserstrahlung wird vorzugsweise ein Dioden-Laser mit einer Wellenlänge von 500 nm bis 1100 nm, z.B. ein Festkörper-Dioden-Laser mit einer Wellenlänge von 1064, verwendet. Einer der Fügepartner, welcher lasertransparent ausbildet ist, wird von dem Laser durchstrahlt und die Energie wird vom zweiten, laserabsorbierenden Fügepartner an dessen Oberfläche absorbiert. An dieser Oberfläche schmilzt der Kunststoff auf, so dass hierdurch die beiden Fügepartner stoffschlüssig miteinander verbunden werden können. Dazu ist es erforderlich, dass eine der Halbschalen im Bereich der Laserwellenlänge einen hohen Transmissionsgrad aufweist, während die andere Halbschale bei dieser Wellenlänge einen hohen Absorptionsgrad aufweist. Die Laserabsorption kann beispielsweise erreicht werden, indem dem Kunststoff der einen Halbschale laserabsorbierende Pigmente, vorzugsweise Ruß, zugesetzt werden. Zweckmäßigerweise ist die Halbschale, deren Fügerand die Nut bildet, lasertransparent und die Halbschale, deren Fügerand eine Feder bildet, laserabsorbierend.

In einer weiteren Ausführung wird ein Diodenlaser mit einer Wellenlänge von 1300 - 2200 nm, vorzugsweise von 1400 nm - 2000 nm, verwendet. Im Bereich dieser Wellenlängen können die Makromoleküle des Kunststoffes direkt durch die Laserstrahlung angeregt werden und dieser erreicht so die nötige Schweißtemperatur. Eine Pigmentierung des Kunststoffes ist daher bei diesen Wellenlängen nicht mehr notwendig. Vorzugsweise weist der Laser einen Dioden-Emitter mit Thulium und/oder Erbium auf. Die Schmelzzone wird bei diesem Schweißverfahren durch eine Fokussierung des Laserstrahls auf den gewünschten Bereich bestimmt.

Unabhängig vom eingesetzten Laserverfahren kann zumindest eine der beiden Halbschalen aus einem für das menschliche Auge durchsichtigen Kunststoff hergestellt werden, sodass nach dem Schweißvorgang eine optische Kontrolle der Schweißnaht möglich ist. Vorzugsweise ist dies die Nut bildende Halbschale.

Um den Pedelec-Rahmen ästhetisch ansprechend zu gestalten, wird in der Regel eine blickdichte Lackierung der zum Pedelec-Rahmen zusammen gefügten Halbschalen durchgeführt. Dadurch wird auch die ggf. unterschiedliche Optik der beiden Halbschalen, welche insbesondere beim Laserdurchstrahlverfahren aus der zuvor beschriebenen unterschiedlichen Pigmentierung der beiden Halbschalen resultieren kann, eliminiert. Wie bereits erläutert, können die beiden Halbschalen grundsätzlich auch mit einem anderen Fügeverfahren miteinander verbunden werden, z.B. mittels eines konventionellen Klebeverfahrens.

In die Kunststoff-Halbschalen können vor deren Zusammenfügen innenseitig Ausnehmungen eingefräst werden, die zur Halterung von Pedelec-Komponenten, insbesondere eines Elektromotors und/oder Batterieelements und/oder des Tretlagers dienen. Mit Hilfe dieses Nachbearbeitungsschrittes kann die Geometrie höchst flexibel an die konkreten Erfordernisse angepasst werden. So können z.B. hiermit Hinterschneidungen realisiert werden, die mit einem Spritzgussverfahren allein nicht bzw. nur mit großem Aufwand (zusätzlicher Schieber etc.) herstellbar sind. Es hat sich im Rahmen der Erfindung herausgestellt, dass das verwendete teilaromatische Polyamid nicht nur für Spritzgussvorgänge, sondern auch für eine Fräsbearbeitung hervorragend geeignet ist.

Gegenstand der Erfindung ist auch ein Pedelec-Rahmen, hergestellt mit einem Verfahren nach einem der Ansprüche 1 bis 12.

### Kurzbeschreibung der Zeichnungen:

Nachfolgend werden lediglich Ausführungsbeispiele der Erfindung anhand einer Zeichnung näher erläutert. Es zeigen schematisch:
- Fig. 1: einen erfindungsgemäß hergestellten Pedelec-Rahmen in einer dreidimensionalen Darstellung;
- Fig. 2: den Querschnitt A-A in Fig. 1 während des Fügevorgangs;
- Fig. 3: eine weitere Ausführungsform der Erfindung in einer der Fig. 2 entsprechenden Darstellung;
- Fig. 4: einen vergrößerten Ausschnitt der Fig. 2 in dreidimensionaler Darstellung und
- Fig. 5: einen vergrößerten Ausschnitt der Fig. 3 in dreidimensionaler Darstellung.

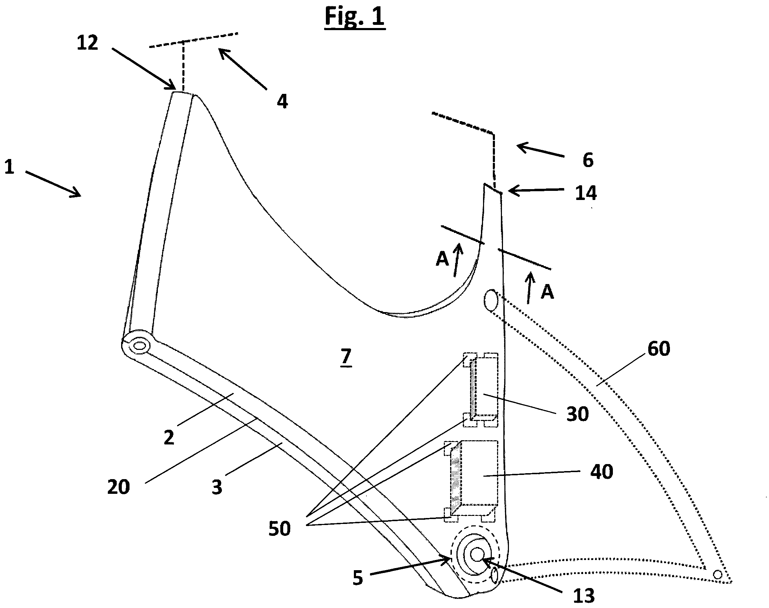

Fig. 1 zeigt einen erfindungsgemäßen Pedelec-Rahmen 1, wobei dieser durch das Zusammenfügen zweier entsprechender Kunststoff-Halbschalen 2, 3 hergestellt wird. Der Pedelec-Rahmen 1 weist eine Aufnahme 12 für einen Lenker 4, eine Aufnahme 13 für ein Tretlager 5 und eine Aufnahme 14 für einen Fahrersattel 6 auf. Lenker 4, Tretlager 5 und Fahrersattel 6 sind in der Fig. 1 lediglich angedeutet. An dem Pedelec-Rahmen ist ein ge-strichelt dargestellter, ggf. gefedert aufgebildeter Hinterbau 60 befestigt, die zur Aufnahme des (nicht dargestellten) Hinterrads des Pedelec dient. Die beiden Halbschalen 2, 3 bestehen aus einem faserverstärkten thermoplastischen Kunststoff, welcher ein teilaromatisches Polyamid enthält. Durch das Zusammenfügen der beiden Halbschalen 2, 3 bildet sich ein innerer Hohlraum 7, der eine Batterie 30, einen Elektromotor 40 sowie das Tretlager 5 des Pedelecs aufnimmt. Durch das Zusammenfügen der Kunststoff-Halbschalen 2, 3 werden ferner Batterie 30, Elektromotor 40 und das Tretlager 5 im inneren Hohlraum 7 jeweils an einer definierten Stelle positioniert. Die mittels eines Spritzgussverfahrens hergestellten Kunststoff-Halbschalen 2, 3 weisen hierzu einstückig angeformte Positionierungselemente 50 auf, die Elektromotor 40, Batterie 30 und Tretlager 5 jeweils in der gewünschten Position halten.

Das teilaromatische Polyamid der Halbschalen besteht im Ausführungsbeispiel aus meta-Xylyendiamin 6, welches aus meta-Xylyendiamin und Adipinsäure gebildet ist. Die Strukturformel dieses Materials lautet:

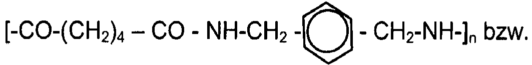

[-CO-(CH₂)₄-CO-NH-CH₂-(C₆H₄)-CH₂-NH-]ₙ.

An die Halbschalen 2, 3 werden im Rahmen des Spritzgussvorganges ferner an der jeweiligen Innenseite Verrippungen und/oder Verbindungs- und/oder Funktionselemente angespritzt. Diese dienen z.B. als Aufnahmen weiterer Pedelec-Komponenten wie Gabel, Tretlager, Sattel oder Lenker. Der Gewichtsanteil des teilaromatischen Polyamids bezogen auf die gesamte Kunststoffmasse ohne Faserverstärkung beträgt im Ausführungsbeispiel 90 %. Die Faserverstärkung des thermoplastischen Kunststoffs besteht aus fein in der Kunststoff-Matrix dieses Polyamids verteilten reinen Glasfasern. Die durchschnittliche Faserlänge beträgt weniger als 1 mm. Der Gewichtsanteil der Fasern im faserverstärkten thermoplastischen Kunststoff beträgt im Ausführungsbeispiel 50%.Nach dem Zusammenfügen werden die beiden Halbschalen 2, 3 stoffschlüssig miteinander verbunden und anschließend blickdicht lackiert.

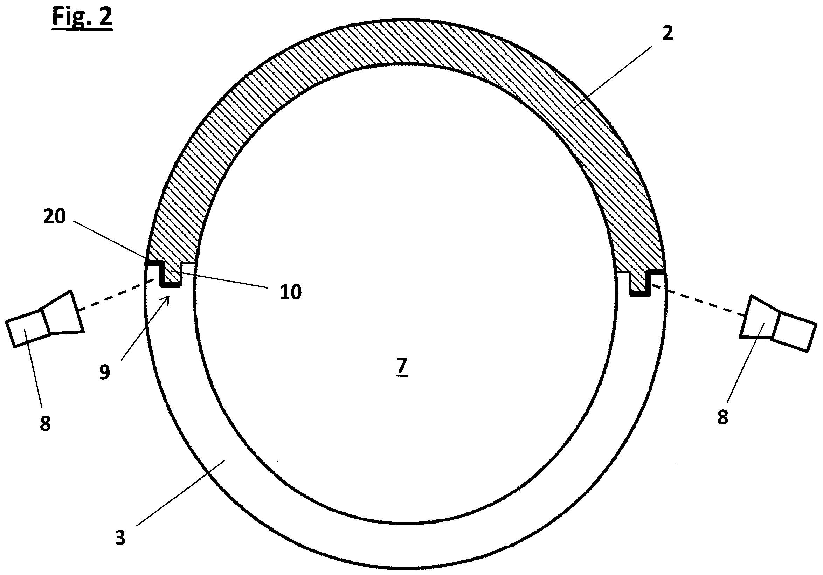

Die in Fig. 2 dargestellte Querschnittsdarstellung zeigt den Schnitt A-A in Fig. 1 durch die Kunststoff-Halbschalen 2, 3. Der Kunststoff der Halbschale 3, welche eine Nut 9 bildet, ist für den Fall, dass der Fügevorgang der beiden Halbschalen 2, 3 mittels eines Lasers 8 erfolgt, für diesen Laser 8 transparent. Die andere Halbschale 2 ist hingegen aus einem Material, das für den verwendeten Laser 8 absorbierend ist. Um die Laserabsorption zu erreichen, wurde dem Kunststoff dieser Halbschale 2 Ruß (durch Schraffur angedeutet) zugesetzt. In einer bevorzugten Ausführung kommt zum Verbinden der zwei Halbschalen das Laserdurchstrahlschweißverfahren zur Anwendung, wobei zur Erzeugung der Laserstrahlung ein Diodenlaser 8, z.B. mit einer Wellenlänge von 1064 nm, verwendet wird. Der Laserstrahl durchstrahlt die eine lasertransparente Halbschale 3 und die Energie des Lasers wird von der zweiten laserabsorbierenden Halbschale 2 an deren Oberfläche absorbiert. Dort schmilzt der Kunststoff auf, sodass dort unter Bildung der Schweißnaht 20 eine stoffschlüssige Verbindung der beiden Halbschalen 2, 3 entsteht. Die Halbschale 3 besteht ferner aus einem für das menschliche Auge durchsichtigen Kunststoffmaterial, so dass die Schweißnaht 20 optisch kontrolliert werden kann.

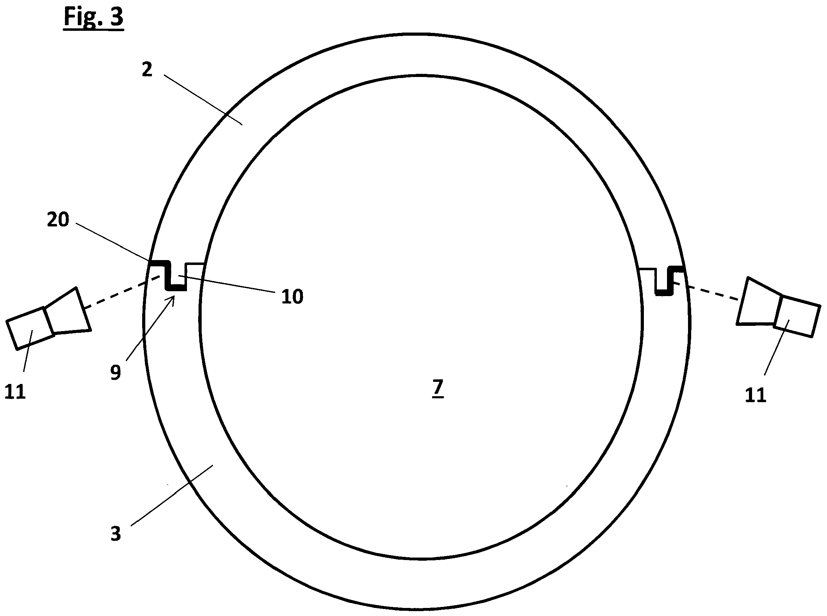

Fig. 3 zeigt ein alternatives Schweißverfahren. Hier wird ein Diodenlaser 11 mit einer Wellenlänge von 1400 nm bis 2000 nm verwendet. Durch eine Fokussierung des Laserstrahls auf die gewünschte Schmelzzone 20 können die Makromoleküle des Kunststoffes direkt angeregt werden, ohne dass Absorber notwendig sind. Auch hier ist die Halbschale 3 aus einem für das menschliche Auge durchsichtigen Kunststoffmaterial hergestellt. Im Rahmen der Erfindung liegt es generell aber auch, die beiden Halbschalen mittels eines Klebstoffes stoffschlüssig miteinander zu verbinden.

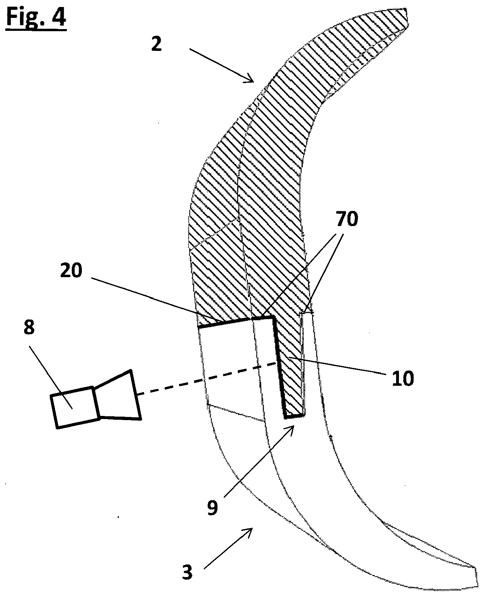

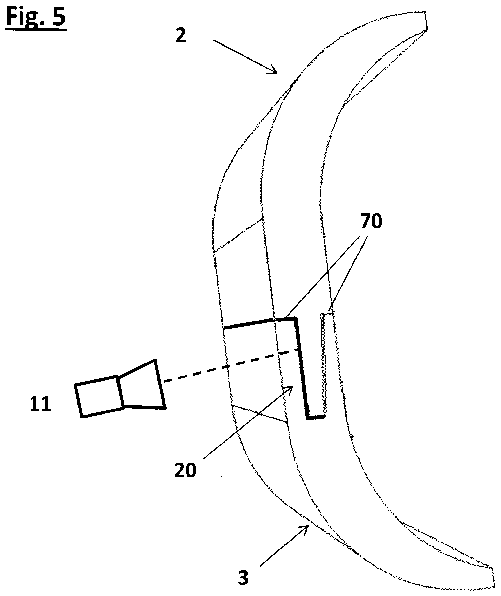

Fig. 4 und 5 zeigen jeweils einen vergrößerten Ausschnitt der Fügeverbindung der zwei Halbschalen 2, 3. Die Geometrie der Nut-Feder-Verbindung ist derart beschaffen, dass bereits durch das Einfügen der Feder 10 in die Nut 9 eine Klemmverbindung entsteht, die die zwei Halbschalen 2, 3 schon vor dem Laserschweißen gegeneinander vorfixiert. Dazu hat die Feder 10 gegenüber der Nut 9 ein leichtes Übermaß.

## Patentansprüche

1. Verfahren zur Herstellung eines Pedelec-Rahmens (1) aus Kunststoff,
- wobei dieser durch, vorzugsweise stoffschlüssiges, Zusammenfügen zweier entsprechender Kunststoff-Halbschalen (2, 3) hergestellt wird,
- wobei der Pedelec-Rahmen (1) Aufnahmen (12, 13, 14) für einen Lenker (4), für ein Tretlager (5) und vorzugsweise für einen Fahrersattel (6) aufweist,
- wobei die beiden Kunststoff-Halbschalen (2, 3) mittels eines Spritzgussverfahrens aus einem faserverstärkten thermoplastischen Kunststoff hergestellt werden, der ein teilaromatisches Polyamid enthält,
- wobei das teilaromatische Polyamid ausgewählt wird aus einem solchen, das aliphatische Dicarbonyl-Wiederholeinheiten und aromatische Diamino-Wiederholeinheiten enthält, oder aus einem solchen, das aromatische Dicarbonyl-Wiederholeinheiten und aliphatische Diamino-Wiederholeinheiten enthält, oder aus einer Mischung der vorgenannten Substanzen, und
- wobei der faserverstärkte thermoplastische Kunststoff neben dem teilaromatischen Polyamid ein aliphatisches Polyamid enthält.

2. Verfahren nach Anspruch 1, wobei das teilaromatische Polyamid meta-Xylylendiamin-Wiederholeinheiten und 1,6-Hexandionyl-Wiederholeinheiten enthält.

3. Verfahren nach einem der vorstehenden Ansprüche, wobei der Gewichtsanteil des teilaromatischen Polyamids bezogen auf die gesamte Kunststoffmasse ohne Faserverstärkung mindestens 50 %, vorzugsweise mindestens 70 %, beträgt.

4. Verfahren nach einem der vorstehenden Ansprüche, wobei zur Faserverstärkung Glas- und/oder Carbon- und/oder Aramidfasern verwendet werden.

5. Verfahren nach einem der vorstehenden Ansprüche, wobei der Gewichtsanteil der Fasern im faserverstärkten thermoplastischen Kunststoff 15 - 70 %, vorzugsweise 40 - 60 %, beträgt.

6. Verfahren nach einem der vorstehenden Ansprüche, wobei die durchschnittliche Länge der Fasern im fertigen hergestellten Pedelec-Rahmen weniger als 15 mm, vorzugsweise weniger als 10 mm, z.B. weniger als 5 mm, beträgt.

7. Verfahren nach einem der vorstehenden Ansprüche, wobei die Geometrie der Halbschalen (2, 3) an ihren Fügerändern derart beschaffen ist, dass der Fügerand der einen Halbschale (3) eine Nut (9) und der Fügerand der anderen Halbschale (2) eine beim Zusammenfügen in die Nut (9) eingreifende Feder (10) aufweist.

8. Verfahren nach Anspruch 7, wobei die Geometrie der Nut-Feder-Verbindung so bemessen ist, dass durch das Fügen der Feder (10) in die Nut (9) eine Klemmverbindung entsteht, welche die beiden Halbschalen (2, 3) gegeneinander vorfixiert.

9. Verfahren nach einem der Ansprüche 1 bis 8, wobei die beiden Kunststoff-Halbschalen (2, 3) randseitig, vorzugsweise umlaufend, mittels Laserstrahlung stoffschlüssig miteinander zum Pedelec-Rahmen (1) verschweißt werden und hierbei einen inneren Hohlraum (7) zur Aufnahme eines Energiespeichers, vorzugsweise einer Batterie (30), sowie eines Elektromotors (40) bilden.

10. Verfahren nach Anspruch 9, wobei die eine Halbschale (2) aus einem laserabsorbierenden Kunststoff und die andere Halbschale (3) aus einem lasertransparenten Kunststoff hergestellt wird.

11. Verfahren nach Anspruch 10, wobei die Halbschale (3), deren Fügerand die Nut (9) bildet, aus dem lasertransparenten Kunststoff und die Halbschale (2), deren Fügerand die Feder (10) bildet, aus dem laserabsorbierenden Kunststoff hergestellt wird.

12. Verfahren nach einem der Ansprüche 1 bis 11, wobei in die Kunststoff-Halbschalen (2, 3) vor deren Zusammenfügen innenseitig Ausnehmungen eingefräst werden, die zur Halterung von Pedelec-Komponenten, insbesondere eines Elektromotors (40) und/oder eines Batterieelements (30) und/oder des Tretlagers (5) dienen.

13. Pedelec-Rahmen (1), hergestellt mit einem Verfahren nach einem der vorstehenden Ansprüche.

## Claims

1. A method for producing a pedelec frame (1) composed of plastic,
- wherein said pedelec frame (1) is produced by joining together two corresponding plastic half-shells (2, 3), preferably by a material bond;
- wherein the pedelec frame (1) comprises receivers (12, 13, 14) for a handlebar (4), for a bottom bracket (5) and preferably for a rider's saddle (6);
- wherein the two plastic half-shells (2, 3) are produced by an injection-moulding process from a fibre-reinforced thermoplastic polymer that contains a partially aromatic polyamide,
- wherein the partially aromatic polyamide is selected from one comprising aliphatic dicarbonyl repeat units and aromatic diamino repeat units, or from one comprising aromatic dicarbonyl repeat units and aliphatic diamino repeat units, or from a mixture of the above-mentioned substances, and
- wherein the fibre-reinforced thermoplastic polymer comprises an aliphatic polyamide in addition to the partially aromatic polyamide.

2. The method according to claim 1, wherein the partially aromatic polyamide comprises meta-xylylenediamine repeat units and 1,6-hexanedionyl repeat units.

3. The method according to one of the preceding claims, wherein the proportion by weight of the partially aromatic polyamide is at least 50%, preferably at least 70%, based on the total mass of the plastic without fibre reinforcement.

4. The method according to one of the preceding claims, wherein glass fibres and/or carbon fibres and/or aramid fibres are used for the fibre reinforcement.

5. The method according to one of the preceding claims, wherein the proportion by weight of the fibres in the fibre-reinforced thermoplastic polymer is 15 - 70%, preferably 40 - 60%.

6. The method according to one of the preceding claims, wherein the average length of the fibres in the finished pedelec frame is less than 15 mm, preferably less than 10 mm, for example less than 5 mm.

7. The method according to one of the preceding claims, wherein the geometry of the plastic half-shells (2, 3) is configured in such a way that the joining edge of the one half-shell (3) has a groove (9) and the joining edge of the other half-shell (2) has a spring (10) that engages in the groove (9) when the half-shells (2, 3) are joined together.

8. The method according to claim 7, wherein the geometry of the spring-and-groove connection is dimensioned such that a clamping connection is obtained by the joining of the spring (10) into the groove (9), which pre-fixes the two plastic half-shells (2, 3) against one another.

9. The method according to one of claims 1 to 8, wherein the two plastic half-shells (2, 3) are joined to one another at the edges by a material bond, preferably all the way round, by welding using laser radiation to form the pedelec frame (1), thereby forming an inner cavity (7) for accommodating an energy storage device, preferably a battery (30), and an electric motor (40).

10. The method according to claim 9, wherein one of the half-shells (2) is made of a laser-absorbing plastic and the other half-shell (3) is made of a laser-transparent plastic.

11. The method according to claim 10, wherein the half-shell (3), the joining edge of which forms the groove (9), is made of the laser-transparent plastic and the half-shell (2), the joining edge of which forms the spring (10), is made of the laser-absorbing plastic.

12. The method according to one of claims 1 to 11, wherein recesses are milled into the insides of the plastic half-shells (2, 3) before they are brought together, said recesses being used to hold pedelec components, in particular an electric motor (40) and/or a battery element (30) and/or the bottom bracket (5).

13. A pedelec frame (1) produced by a method according to one of the preceding claims.

## Revendications

1. Procédé servant à fabriquer un cadre de vélo à assistance électrique (1) à partir de matière synthétique,
- dans lequel ce dernier est fabriqué par assemblage de préférence par liaison de matière de deux demi-coques en matière synthétique (2, 3) correspondantes,
- dans lequel le cadre de vélo à assistance électrique (1) présente des logements (12, 13, 14) pour un guidon (4), pour un pédalier (5) et de préférence pour une selle (6),
- dans lequel les deux demi-coques en matière synthétique (2, 3) sont fabriquées au moyen d'un procédé de moulage par injection à partir d'une matière synthétique thermoplastique renforcée par des fibres, qui contient un polyamide en partie aromatique
- dans lequel le polyamide en partie aromatique est choisi parmi un élément type, qui contient des motifs de répétition de dicarbonyle aliphatiques et des motifs de répétition de diamino armomatiques, ou parmi un élément type, qui convient des motifs de répétition de dicarbonyle aromatiques et des motifs de répétition de diamino aliphatiques, ou parmi un mélange des substances susmentionnées, et
- dans lequel la matière synthétique thermoplastique renforcée par des fibres contient, outre le polyamide en partie aromatique, un polyamide aliphatique.

2. Procédé selon la revendication 1, dans lequel le polyamide en partie aromatique contient des motifs de répétition de méta-xylylènediamine et des motifs de répétition de 1,6-hexandionyle.

3. Procédé selon l'une quelconque des revendications précédentes, dans lequel la fraction en poids du polyamide en partie aromatique est par rapport à l'ensemble de la masse de matière synthétique sans renfort par des fibres d'au moins 50 %, de préférence d'au moins 70 %.

4. Procédé selon l'une quelconque des revendications précédentes, dans lequel des fibres de verre et/ou de carbone et/ou des fibres d'aramide sont utilisées aux fins du renforcement par des fibres.

5. Procédé selon l'une quelconque des revendications précédentes, dans lequel la fraction en poids des fibres dans la matière synthétique thermoplastique renforcée par des fibres est de 15 - 70 %, de préférence de 40 - 60 %.

6. Procédé selon l'une quelconque des revendications précédentes, dans lequel la longueur moyenne des fibres dans le cadre de vélo à assistance électrique fabriqué fin prêt à l'utilisation est inférieure à 15 mm, de préférence inférieure à 10 mm, par exemple inférieure à 5 mm.

7. Procédé selon l'une quelconque des revendications précédentes, dans lequel la géométrie des demi-coques (2, 3) est telle au niveau de ses bords de jonction que le bord de jonction d'une demi-coque (3) présente une rainure (9) et le bord de jonction de l'autre demi-coquille (2) présente une languette (10) venant en prise avec la rainure (9) lors de l'assemblage.

8. Procédé selon la revendication 7, dans lequel la géométrie de la liaison rainure-languette est dimensionnée de telle sorte qu'apparaît du fait de la jonction de la languette (10) dans la rainure (9), une liaison par serrage, laquelle bloque au préalable les deux demi-coques (2, 3) l'une contre l'autre.

9. Procédé selon l'une quelconque des revendications 1 à 8, dans lequel les deux demi-coques en matière synthétique (2, 3) sont soudées côté bord, de préférence en périphérie, l'une à l'autre par liaison de matière au moyen d'un faisceau laser en le cadre de vélo à assistance électrique (1) et forment ce faisant un espace creux intérieur (7) servant à recevoir un accumulateur d'énergie, de préférence une batterie (30), ainsi qu'un moteur électrique (40).

10. Procédé selon la revendication 9, dans lequel une demi-coque (2) est fabriquée à partir d'une matière synthétique à absorption de laser et l'autre demi-coque (3) est fabriquée à partir d'une matière synthétique transparente au laser.

11. Procédé selon la revendication 10, dans lequel la demi-coque (3), dont le bord de jonction forme la rainure (9), est fabriquée à partir de la matière synthétique transparente au laser et la demi-coque (2), dont le bord de jonction forme la languette (10), est fabriquée à partir de la matière synthétique absorbant le laser.

12. Procédé selon l'une quelconque des revendications 1 à 11, dans lequel des évidements, qui servent à maintenir des composants de vélo à assistance électrique, en particulier un moteur électrique (40) et/ou un élément de batterie (30) et/ou le pédalier (5), sont fraisés côté intérieur dans les demi-coques en matière synthétique (2, 3) avant leur assemblage.

13. Cadre de vélo à assistance électrique (1) fabriqué avec un procédé selon l'une quelconque des revendications précédentes.
